# EUROPEAN PATENT SPECIFICATION

(11) **EP 1 925 132 B1**
(45) Date of publication and mention of the grant of the patent: **15.08.2012**
(21) Application number: 06786725.9
(22) Date of filing: 07.07.2006
(51) Int. Cl.: H04W 28/24

(54) **MANAGING NEGOTIATIONS OF QUALITY OF SERVICE PARAMETERS IN WIRELESS NETWORKS**
VERWALTUNG VON AUSHANDLUNGEN VON DIENSTGÜTEPARAMETERN IN DRAHTLOSEN NETZEN
GESTION DE NEGOCIATIONS DE PARAMETRES DE QUALITE DE SERVICE DANS DES RESEAUX SANS FIL

(30) Priority: 11.07.2005 US 179091
(43) Date of publication of application: 28.05.2008
(73) Proprietor: QUALCOMM INCORPORATED, San Diego, CA 92121 (US)
(72) Inventor: YARAMADA, Saritha, San Diego, California 92130 (US); BABBAR, Uppinder Singh, San Diego, California 92126 (US); NOOKALA, Sriram, Nagesh, San Diego, California 92130 (US); SALI, Vipin c/o Qualcomm Incorporated, San Diego, California 92121-1714 (US)
(74) Representative: Heselberger, Johannes
(86) International application number: PCT/US2006/026665
(87) International publication number: WO 2007/008751

(56) References cited:
- WO-A-99/67902
- WO-A2-01/39525
- US-A1- 2004 037 264
- US-B1- 6 728 215

## Description

### BACKGROUND

### Field

The present invention relates generally to mobile phone technology, and more specifically to managing negotiations of quality of service (QoS) parameters with base stations.

### Background

The demand for quality of service (QoS) standards for Internet applications and services is currently increasing. QoS standards ensure a defined level of performance (e.g., a defined amount of bandwidth, delay, etc.) so a particular Internet application can function properly or at a reasonable level of quality. In packet-switched networks, such as the Internet, QoS standards give certain assurances about packet handling and performance over the network, such as the amount of delay and jitter (out-of-order delivery) of packets being routed through the network.

Some Internet applications and services (referred to as QoS-based applications and services) require QoS assurances to function properly or at an acceptable level of quality. Such QoS-based applications and services include, but are not limited to, realtime voice and video calls over the Internet (VoIP or IP telephony), streaming multimedia, dedicated link emulation, instant messengers, chat rooms, Global Positioning Systems, emergency calls, online gaming, etc. For example, VoIP may require a particular amount of bandwidth and strict limits on delay and jitter to ensure that voice or video communications can occur properly.

The Internet does not have a standard QoS mechanism built into its structure to provide QoS support. As such, to provide QoS assurances for QoS-based applications, data packets that travel through routers in the Internet (of any other network) are typically given priority over data packets from non-QoS-based applications. There are several mechanisms well known in the art that identify data packets from QoS-based applications and make determinations as to which packets have priority to provide QoS assurances.

Recently, Internet applications and services are being provided using mobile phone technology (e.g., third generation (3G) technology) that have expanded in ability to transfer both voice data and non-voice data. In a cellular mobile phone system that is Internet capable, hardware and software are included at base stations (that are connected to the Internet) and mobile terminals (e.g., cellular phones) to provide Internet access and service. As such, through the base station, a mobile terminal can access the Internet and run Internet-based applications that execute on the mobile terminal.

It is desirable to develop technology that enables QOS-based applications to operate in conjunction with mobile phone technology.

WO 01/39525 A2 discloses a method of transfer of optimization algorithm parameters during handover of a mobile station between radio network subsystems, wherein, instead of renegotiating parameters relating to an optimization algorithm previously negotiated between a mobile station and a target radio network subsystem during connection handover of the mobile station from a source radio network subsystem, prestored parameters are transferred instead between the source radio network subsystem and the target radio network subsystem either directly over and existing lur interface or via core network over an Iu interface.

US 2004/037264 A1 relates to a system and method for use in wireless packet data mode communications, for enabling faster connection time for communications between a mobile station and a base station. The invention provides for the use of a profile identifier to reference and activate on a base station a quality of service related to the communication between the mobile station and the base station. The profile identifier is uniquely associated with a quality of service profile, which was pre-negotiated by the mobile station or is a quality of service profile, which is permanent for the type of mobile station.

WO 99/67902 relates to a method and apparatus for transferring communication within a communication system, as follows: during communication with a serving base station, a handover candidate list is provided to the remote unit. The list comprises a set of neighboring base stations that are capable of supporting the service requirements of the remote unit and does not include any neighboring base stations that are incapable of supporting the current service required by the remote unit.

US 6,728,215 B1 concerns a system and method for placing wireless calls on an Internet protocol (IP) based local area network (LAN) based upon quality of service conditions. The gatekeeper within the IP based LAN has access to the quality of service information and periodically sends the quality of service to the base station controller (BSC) functionally within the access node of the IP based LAN.

The BSC functionality then transmits the quality of service parameters on the system information message via the base transceiver station (BTS) to the mobile stations served by the BTS. The mobile stations receive this quality of service information and use it to decide upon a transport method to complete outgoing wireless calls.

### SUMMARY

In some aspects, during an initial sending and receiving of QoS parameters between a QoS-based application and a data stack controller of a mobile terminal, the QoS parameters are stored to a data stack of the mobile terminal. The QoS parameters are then used in an initial negotiation between the data stack controller and a base station. Subsequent re-negotiations (after the initial negotiation) of QoS parameters between the data stack controller and other base stations do not require any subsequent re-sending or re-receiving (after the initial sending and receiving) of QoS parameters between the data stack controller and the QoS-based application. Any subsequent re-negotiation of parameters between the data stack controller and a base station is implemented by retrieving the requested parameters from the data stack.

In some aspects, after the initial sending and receiving of QoS parameters between the QoS-based application and the data stack controller, the QoS-based application is "kept blind" of any later re-negotiations between the data stack controller and base stations and continues its operation without any disruptions due to these re-negotiations. This is true even during re-negotiations at handoffs between QoS and non-QoS aware base stations as the mobile terminal moves between different cell regions. During these handoffs, the QoS-based application continues operating without having to re-send parameters to the data stack controller and simply receives QoS support during operation or receives a "best effort" indicator (and thus operates under "best effort" conditions).

### BRIEF DESCRIPTION OF THE DRAWINGS

**FIG. 1** is a diagram of a mobile communications system connected with a network.

**FIGS. 2-4** are flowcharts of a method 200 for managing parameter negotiations at call handoffs between QoS and non-QoS aware base stations.

**FIG. 5** is a diagram conceptually illustrating various components used in a mobile communications system for accessing a network.

**FIG. 6** presents a computer system with which some embodiments are implemented.

### DETAILED DESCRIPTION

In the following description, numerous details are set forth for purpose of explanation. However, one of ordinary skill in the art will realize that the invention may be practiced without the use of these specific details. In other instances, well-known structures and devices are shown in block diagram form in order not to obscure the description of the invention with unnecessary detail. The word "exemplary" is used herein to mean "serving as an example, instance, or illustration." Any embodiment described herein as "exemplary" is not necessarily to be construed as preferred or advantageous over other embodiments.

Some mobile terminal applications are QoS-based applications (e.g., VoIP, streaming multimedia, etc.) that require, not only QoS support from the Internet, but also QoS support from the base station with which the mobile terminal communicates. However, not all base stations provide QoS support/assurances. Typically, QoS support/assurances depend on the type of mobile communications technology implemented by the base station. Base stations that provide QoS support/assurances are referred to as QoS aware, whereas base stations that do not provide QoS support/assurances are referred to as non-QoS aware base stations. QoS aware base stations negotiate QoS parameters with mobile terminals and abide to the agreed QoS parameters once negotiated. QoS aware base stations are also compatible with protocols that support QoS.

As the mobile terminal moves from one cell region to another, handoffs are made from one base station to another. If the mobile terminal is currently running a QoS-based application, however, handoffs from a QoS aware to a non-QoS aware base station, or vice versa, can be problematic. As such there is a need for a method of performing seamless handoffs between QoS aware and non-QoS aware systems/base stations.

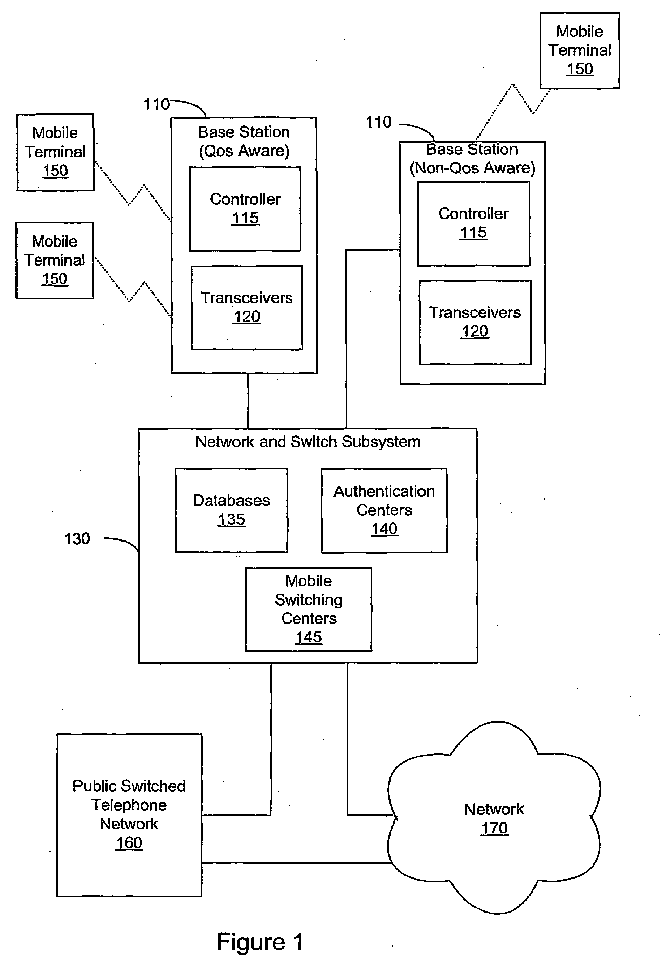

**FIG. 1** is a diagram of a mobile communications system connected with a network. The mobile communications system comprises one or more base station subsystems 110, a network and switch subsystem 130, one or more mobile terminals 150, and a public switched telephone network 160. A base station subsystem 110 is coupled with the network and switch subsystem 130, the public switched telephone network 160, and a network 170 (such as a LAN, WAN, the Internet, an Intranet, etc.), and communicates with the mobile terminals 150 through a form of wireless transmission (radio transmission) via the airwaves.

Each base station subsystem 110 is typically comprised of a base station controller 115 and one or more base transceiver stations 120. A base transceiver station 120 is used to transmit and receive radio signals to and from mobile terminals 150 and includes equipment to do so (e.g., radio tower, etc.). The base station controller 115 is used to pass on signal connections to mobile switching centers 145 of the network and switch subsystem 130. Other hardware and/or software components of the base station subsystem 110 having other functions (such as negotiating parameters and performing handshaking protocols) are well known in the art and not discussed in detail here.

The network and switch subsystem 130 is typically comprised of a plurality of home and visitor databases 135, a plurality of authentication centers 140, and a plurality of mobile switching centers 145. The home and visitor location databases 135 are used to store records of subscriber information, location information for the mobile terminals 150, and other information. The authentication center 140 is used in conjunction with the home and visitor location databases 135 to provide authentication for security purposes. The mobile switching centers 145 are used to switch signal connections for the public switched telephone network 160 and the base station controllers 115.

Subscribers/users of a subscribed network are able to communicate with other subscribers or with non-subscribers outside the network (such as users within the public switched telephone network 160) through use of a mobile terminal 150 that comprises a receiving device (e.g., cellular phone, personal digital assistant (PDA), laptop computer, Blackberry™, personal digital assistant (PDA), or any other portable computer, etc.).

Through use of a mobile terminal 150, subscribers/users are also able to access the network 170 through a base station subsystem 110. The mobile terminal 150 typically contains software and/or hardware (such as a data stack controller and applications) that interface with the base station subsystem 110 and interact with the network 170 to send and retrieve data to and from the network 170. In some embodiments, the software and/or hardware of the mobile terminal 150 comprise QoS-based applications (e.g., VoIP, streaming multimedia, etc.) that require QoS assurances/support from the base station subsystem 110 (with which the mobile terminal communicates) for the QoS-based application to function properly or at a reasonable level of quality.

Some base station subsystems 110 provide QoS assurances/support (i.e., are QoS aware) and some do not (i.e., are non-QoS aware) depending on the type of mobile communications technology implemented by the base station subsystem 110. An example of a QoS aware mobile communications technology is High Data Rate (HDR) (also referred to as 1xEVDO which is a wireless data technology from QUALCOMM. HDR (1xEVDO is currently being used as the 3G technology for CDMAOne network carriers (known as CDMA2000) and is optimized for Internet Protocol (IP) packets and Internet access. Another example of a QoS aware mobile communications technology is W-CDMA Revision 9 (and up). Examples of non-QoS aware mobile communications technologies are HDR (1xEVDO release 0 and CDMA2000 1X.

While a call on a mobile terminal 150 is active, if the mobile terminal 150 moves from a first cell region serviced by a first base station that is QoS aware to a second cell region serviced by second base station that is non-QoS aware, or vice versa, a handoff of the call to the next station is made. In some embodiments, an active call maintained on the mobile terminal 150 accesses the network 170 and implements a QoS-based application on the mobile terminal 150. In some embodiments, the mobile terminal 150 contains software and/or hardware that enables a seamless handoff between the QoS aware and non-QoS aware base station subsystems (or vice versa) so that the QoS-based application runs without interruption.

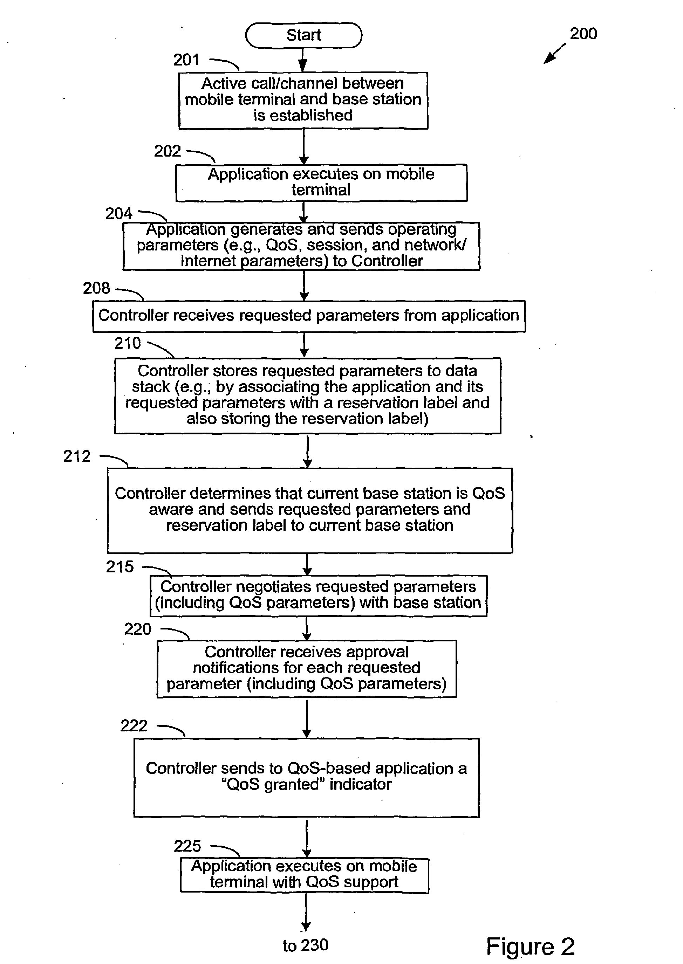

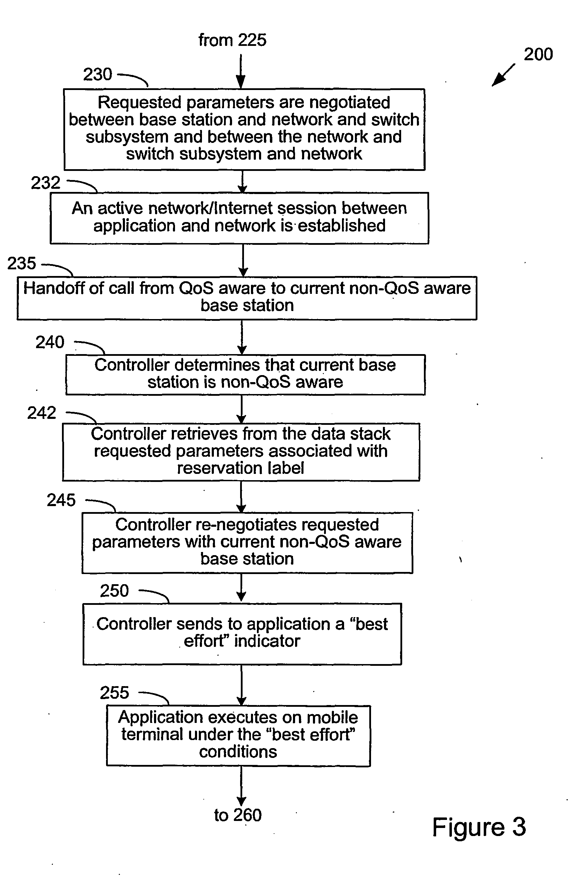

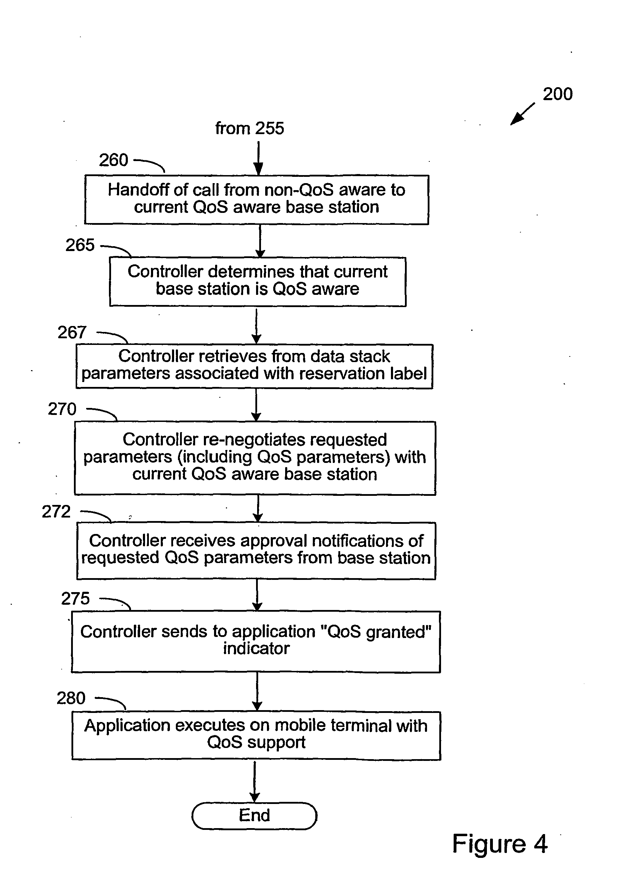

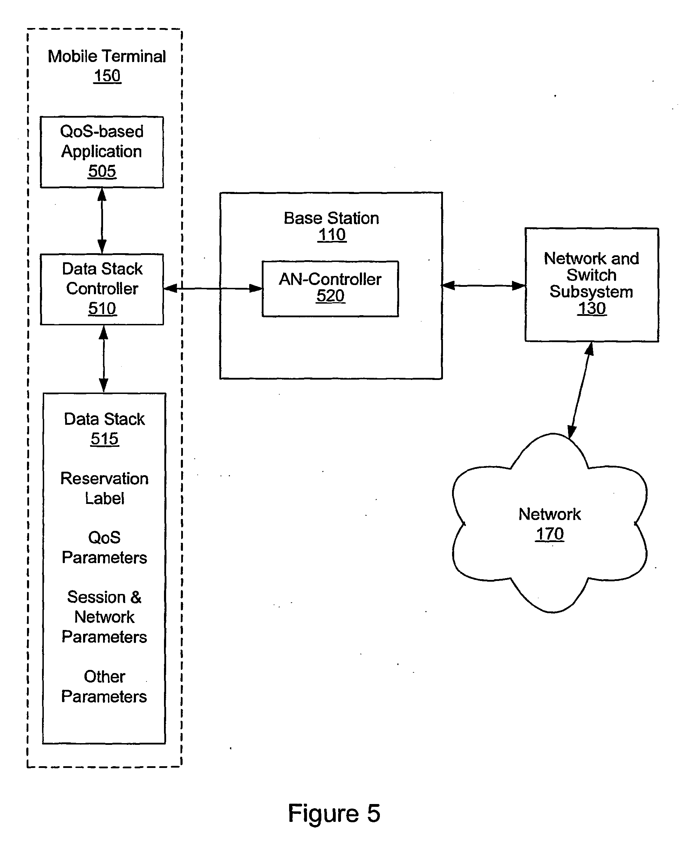

**FIGS. 2-4** are flowcharts of a method 200 for managing parameter negotiations at call handoffs between QoS and non-QoS aware base stations. The method 200 of **FIGS. 2-4** relate to a situation in which the mobile terminal is first serviced by a QoS aware base station, then a non-QoS aware base station, and then a QoS aware base station. The method 200 is described in relation to **FIG. 5****.**

**FIG. 5** is a diagram conceptually illustrating various components used in a mobile communications system for accessing a network 170. The various components of **FIG. 5** includes a mobile terminal 150, a base station 110, and a network and switch subsystem 130. The mobile terminal 150 comprises a QoS-based application 505, a data stack controller 510 (also referred to as an AT-controller), and a data stack 515. The mobile terminal 150 interfaces with the base station 110 using the data stack controller/AT-controller 510. In some embodiments, the base station 110 interfaces with the data stack controller/AT-controller 510 of the mobile terminal 150 through an AN-controller 520.

In some embodiments, the QoS-based application 505 comprises an Internet-based application (e.g., VoIP, streaming multimedia, etc.) that accesses the Internet and provides an Internet-based service. In other embodiments, the QoS-based application 505 is another type of application. The data stack controller 510 interfaces with the QoS-based application 505 and the base station 110 and manages the data stack 515 (a storage device). The data stack controller 510 stores and receives data (such as parameters) to and from the data stack 515. In some embodiments, the data stack controller 510 comprises the operating system of the mobile terminal 150. In some embodiments, the data stack controller 510 comprises hardware and/or software configured or programmed to perform some steps of the method 200 of FIGS. 2-4.

The method 200 begins when an active call/channel between the mobile terminal 150 and the base station 110 is established and maintained (at 201). The QoS-based application 505 then begins executing (at 202) on the mobile terminal 150. The QoS-based application 505 then generates and sends (at 204) operating parameters (e.g., QoS, session, and network/Internet parameters) to the data stack controller 510 that define operational modes/characteristics of the QoS-based application 505. The operational parameters of the QoS-based application 505 are referred to herein as the requested parameters. The data stack controller 510 receives (at 208) the requested parameters from the QoS-based application 505

The data stack controller 510 then stores (at 210) the requested parameters to the data stack 515. In some embodiments, the data stack controller 510 uses (at 210) a reservation label to store (and later retrieve) the requested parameters to the data stack 515. The data stack controller 510 does so by associating/binding the QoS-based application 505 with an identifier (reservation label) that uniquely differentiates the QoS-based application 505 from other applications. The data stack controller 510 then stores the reservation label and the requested parameters to the data stack 515 and associates/links the reservation label with the requested parameters. The reservation label can then be used to later retrieve the requested parameters from the data stack 515.

The parameters requested by the QoS-based application 505 include QoS parameters specifying/requesting particular values for particular operating characteristics of the QoS-based application that provide assurances that the QoS-based application functions properly or at an acceptable predetermined level of quality. In some embodiments, QoS parameters specify a particular amount of bandwidth or a maximum amount of delay or jitter required by the QoS-based application. In other embodiments, the QoS parameters specify values for other operating characteristics of the QoS-based application. In some embodiments, the QoS parameters specify two or more different values for one operating characteristic, each value being acceptable for operation of the QoS-based application. For example, the QoS parameters may specify first (high), second (middle), and third (low) bandwidth values that are acceptable for the QoS-based application.

The parameters requested by the QoS-based application 505 may also comprise other parameters such as session parameters (e.g., session identification number, etc.) that define operational modes/characteristics of a network/Internet session. The requested parameters may further include network/Internet parameters that define network related operational modes/characteristics of the QoS-based application 505. Examples of network/Internet parameters are information transfer rate, alphabet, parity, interrupt procedure, and other network protocol features. Session and network parameters are well known in the art and thus, are not discussed in detail here.

After the data stack controller 510 stores (at step 210) the requested parameters from the QoS-based application 505, it sends (at 212) the requested parameters to the base station 110 that services the cell region in which the mobile terminal 150 is located, the base station being referred to herein as the current base station. It is assumed for illustrative purposes that the current base station at the initial negotiation is a QoS aware base station. In some embodiments, the data stack controller 510 also sends the reservation label associated with the requested parameters to the base station 110 so that only the reservation label needs to be transmitted between the base station 110 and the data stack controller 510 in later re-negotiations. In some embodiments, the data stack controller 510 also determines (at 212) that the current base station is QoS aware and thus, sends QoS parameters to the base station 110. The data stack controller 510 may do so, for example, by receiving capabilities information regarding the current base station from the current base station.

The data stack controller 510 then negotiates (at 215) the requested parameters with the base station 110. Negotiations of requested session and network/Internet parameters are part of a sequence of events (i.e., handshaking) following a set of protocols (e.g., Internet Protocol (IP)) that establish agreement of operational modes required prior to information exchange to initiate an network/Internet session). Mechanisms of handshaking and network/Internet protocols are well known in the art and thus are not described in detail here.

The data stack controller 510 also negotiates (at 215) the requested QoS parameters with the base station 110. In negotiating the requested QoS parameters, the data stack controller 510 is effectively inquiring whether the base station 110 has adequate resources to assure that the requested QoS parameters can be met. At any given time, however, the base station 110 services a plurality of mobile terminals 150 in its cell region and must analyze its network capacities and allocate resources (e.g., bandwidth) among the plurality of mobile terminals 150. A non-QoS aware base station 110 will typically reduce the amount of resources for each mobile terminal (e.g., reduce the bandwidth per mobile terminal) as more mobile terminals enter its cell region. However, as stated above, QoS aware base stations negotiate QoS parameters with mobile terminals and abide to the agreed QoS parameters once negotiated. As such, in certain conditions (e.g., where too many mobile terminals are currently being serviced in the cell region), a QoS aware base station 110 may be unable to ensure the QoS parameters requested by the mobile terminal 150 can be supported. In such situations, the base station 110 may, for example, not approve the requested QoS parameters and not service the mobile terminal 150 until adequate resources are available. Or, if the requested QoS parameters specify two or more different values for an operating characteristic (e.g., a first (high), second (middle), and third (low) bandwidth values), the base station may approve one of the values which can currently be supported by the base station.

During negotiations of the requested parameters, the base station 110 analyzes its network capabilities and sends notifications approving or denying the requested parameters to the data stack controller 510. For illustrative purposes, it is assumed that the data stack controller receives (at 220) approval notifications for each requested parameter (including QoS parameters). The data stack controller 510 then sends (at 222) to the QoS-based application 505 a "QoS granted" indicator/signal that indicates the requested QoS parameters are ensured and supported by the base station 110. The QoS-basted application 505 then executes (at 225) on the mobile terminal with QoS support.

The requested parameters are then negotiated (at 230) between the base station 110 and the Network and Switch Subsystem 130 and between the Network and Switch Subsystem 130 and the network 170. As discussed above, negotiations of the requested session and network/Internet parameters are part of a sequence of events (i.e., handshaking) following a set of protocols (e.g., Internet Protocol (IP)) that establish agreement of operational modes required prior to information exchange to initiate a network/Internet session. After the requested parameters are negotiated with the network 170, an active network/Internet session between the mobile terminal 150 (i.e., the QoS-based application 505) and the network 170 is established and maintained (at 232).

After an active network/Internet session between the QoS-based application 505 and the network 170 is established (at 232), for illustrative purposes, it is then assumed that the mobile terminal 150 moves to a cell region that is serviced by a non-QoS aware base station 110 (the current base station) while a call on the mobile terminal 150 is active. This causes a handoff (at 235) of the call from a QoS aware base station to a non-QoS aware base station to occur whereby the mobile terminal 150 no longer receives QoS support/assurances. During the handoff of the call, the reservation label associated with the QoS-based application 505 is passed to the current non-QoS aware base station. The data stack controller 510 also determines (at 240) that the current base station is non-QoS aware (e.g., by receiving capabilities information from the current base station).

The data stack controller 510 then retrieves (at 242), from the data stack 515, the parameters associated with the reservation label. The data stack controller 510 renegotiates (at 245) the requested parameters (excluding QoS parameters) with the current non-QoS aware base station. Since it has been determined that the base station is non-QoS aware, the data stack controller sends to the QoS-based application 505 (at 250) a "best effort" indicator/signal that indicates the QoS-based application 505 will not receive QoS support but will receive the "best effort" of resources of the base station 110 in regards to the requested QoS parameters (which is typically below the level of resources specified by the QoS parameters). The QoS-based application 505 then executes (at 255) on the mobile terminal under the "best effort" conditions.

For illustrative purposes, it is then assumed that the mobile terminal 150 moves back to a cell region that is serviced by a QoS aware base station 110 (the current base station) while a call on the mobile terminal 150 is active. This causes a handoff (at 260) of the call from a non-QoS aware base station to a QoS aware base station to occur. During the handoff of the call, the reservation label associated with the QoS-based application 505 is passed to the current QoS aware base station. The data stack controller 510 also determines (at 265) that the current base station is QoS aware (e.g., by receiving capabilities information from the current base station).

The data stack controller 510 retrieves (at 267), from the data stack 515, the parameters associated with the reservation label. The data stack controller 510 then renegotiates (at 270) the requested parameters (including QoS parameters) with the current QoS aware base station. For illustrative purposes, it is assumed that the data stack controller 510 receives (at 272) approval notifications of the requested QoS parameters from the base station. As such, the data stack controller 510 sends to the QoS-based application 505 (at 275) a "QoS granted" indicator/signal that indicates the requested QoS parameters are ensured and supported by the QoS aware base station 110. The QoS-based application 505 then executes (at 280) on the mobile terminal with QoS support. The method 200 then ends.

As described above, at the initial sending and receiving of parameters (at steps 204 and 208) between the data stack controller 510 and the QoS-based application 505, the requested parameters are received by the data stack controller 510 and stored (at 210) to the data stack 515. These requested parameters are then used in the initial negotiation (at step 215) of parameters between the data stack controller 510 and the base station 110. Note that in subsequent re-negotiations (after the initial negotiation) of parameters between the data stack controller 510 and other base stations 110 (at steps 245 and 270) does not require any subsequent re-sending of the QoS parameters from the QoS-based application and any re-receiving of the QoS parameters by the data stack controller 510 (after the initial sending and receiving). Rather, any subsequent renegotiation of parameters between the data stack controller 510 and a base station 110 is implemented by retrieving the requested parameters (or retrieving a reservation label) from the data stack 515.

In this way, after the initial interaction between the data stack controller 510 and the QoS-based application 505 (at steps 204 and 208), the QoS-based application 505 is "kept blind" of any later re-negotiations between the data stack controller 510 and base stations 110 and continues its operation without any disruptions caused by these re-negotiations and without being shut down. This is true even during re-negotiations at handoffs between QoS and non-QoS aware base stations as the mobile terminal moves between different cell regions. During these handoffs, the QoS-based application 505 continues operating without having to re-send parameter to the data stack controller and simply receives QoS support during operation or receives a "best effort" indicator (and thus operates under "best effort" conditions).

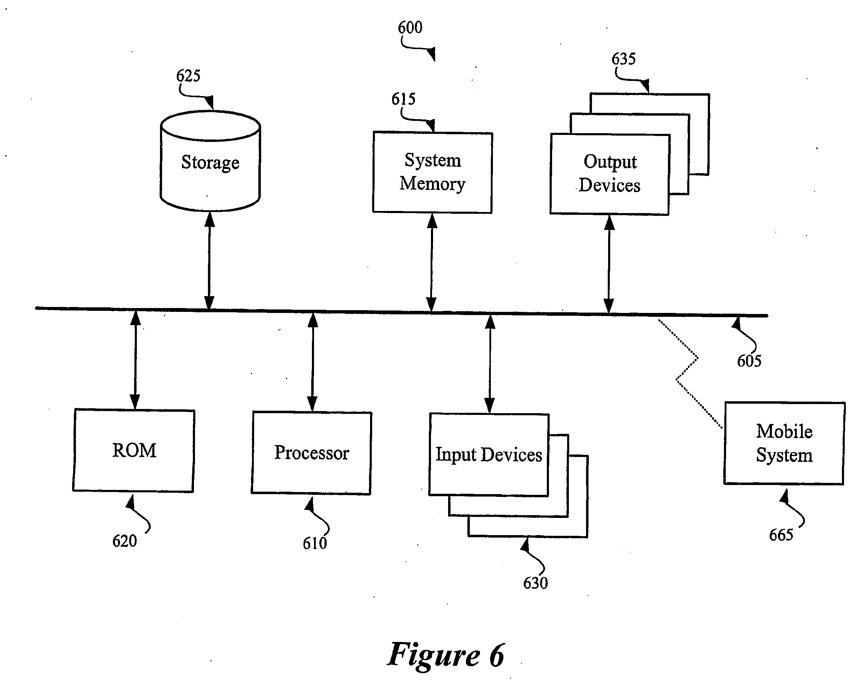

**FIG. 6** presents a computer system 600 with which some embodiments are implemented. In some embodiments, the computer system 600 comprises a mobile terminal. The computer system 600 includes a bus 605, a processor 610, a system memory 615, a read-only memory 620, a permanent storage device 625, input devices 630, and output devices 635.

The bus 605 collectively represents all system, peripheral, and chipset buses that communicatively connect the numerous internal devices of the computer system 600. For instance, the bus 605 communicatively connects the processor 610 with the read-only memory 620, the system memory 615, and the permanent storage device 625.

The read-only-memory (ROM) 620 stores static data and instructions that are needed by the processor 610 and other modules of the computer system. The permanent storage device 625, on the other hand, is read-and-write memory device. This device is a non-volatile memory unit that stores instruction and data even when the computer system 600 is off. Some embodiments use a mass-storage device (such as a magnetic or optical disk and its corresponding disk drive) as the permanent storage device 625. Other embodiments use a removable storage device (such as a floppy disk or zip® disk, and its corresponding disk drive) as the permanent storage device.

Like the permanent storage device 625, the system memory 615 is a read-and-write memory device. However, unlike storage device 625, the system memory is a volatile read-and-write memory, such as a random access memory (RAM). The system memory stores some of the instructions and data that the processor needs at runtime.

Instructions and/or data needed to perform methods of some embodiments are stored in the system memory 615, the permanent storage device 625, the read-only memory 620, or any combination of the three. For example, the various memory units may contain instructions for performing the above-described functions of the data stack controller in managing negotiations of QoS parameters in accordance with some embodiments. The various memory units may also contain instructions that comprise the QoS-based application and contain parameter data that comprises the data stack. From these various memory units, the processor 610 retrieves instructions to execute and data to process in order to execute the processes of some embodiments.

The bus 605 also connects to the input and output devices 630 and 635. The input devices 630 enable a user to communicate information and select commands to the computer system 600. The input devices 630 include alphanumeric keyboards and cursor-controllers. The output devices 635 display images generated by the computer system 600. The output devices include printers and display devices, such as cathode ray tubes (CRT) or liquid crystal displays (LCD).

Finally, as shown in **FIG. 6**, the bus 605 also remotely connects (through a form of wireless transmission) the computer system 600 to a mobile communication system 665 through, for example, a receiver (not shown). In this manner, the computer system 600 can be a part of the mobile communication system 665. Any or all of the components of the computer system 600 may be used in conjunction with some embodiments. However, one of ordinary skill in the art would appreciate that any other system configuration may also be used in conjunction with other embodiments.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and method steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or method described in connection with the embodiments disclosed herein may be embodied directly in hardware (i.e., hardwired), in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a mobile terminal. In the alternative, the processor and the storage medium may reside as discrete components in a mobile terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the claims.

## Claims

1. A computer program product comprising a computer readable medium having instructions stored thereon which when executed on a mobile terminal (150) cause the mobile terminal to transmit quality of service, QoS, parameters to base stations (110), the computer program product comprising sets of instructions for:
receiving (208) QoS parameters from a QoS-based application (505) operating on the mobile terminal (150);
storing (210) the QoS parameters, along with an associated identifier, to a data stack (515) of the mobile terminal (150);
transmitting (212) the QoS parameters to a first base
station; the computer program product being **characterized by** further comprising the steps of
transmitting the QoS parameters to a second base station by retrieving the QoS parameters from the data stack (515) based upon the associated identifier, wherein the retrieving of the QoS parameters from the data stack permits subsequent re-negotiations at handoffs between QoS and non-QoS aware base stations without the QoS-based application having to re-send the QoS parameters.

2. The computer program product of claim 1 wherein the set of instructions for transmitting the QoS parameters to the second base station comprises a set of instructions for transmitting the QoS parameters to the second base station without re- receiving the QoS parameters from the QoS-based application.

3. The computer program product of claim 1 wherein the QoS-based application is configured to continue operating without any disruption caused by the transmitting of the QoS parameters to the second base station.

4. The computer program product of claim 1 wherein the QoS parameters comprise a specified amount of bandwidth, a maximum amount of delay, a maximum amount of jitter, or any combination thereof.

5. The computer program product of claim 1 wherein the QoS-based application is configured to access the Internet and provide an Internet-based service.

6. The computer program product of claim 1 further comprising sets of instructions for: transmitting the QoS parameters to a third base station by retrieving the QoS parameters from the data stack, the third base station being a QoS aware base station; and sending to the QoS-based application an indicator that indicates the QoS parameters are supported by the third base station.

7. The computer program product of claim 6 wherein: the transmitting of QoS parameters to the third base station is caused by a second handoff of the active call from the second base station to the third base station.

8. The computer program product of claim 7 wherein the second base station is a QoS aware base station, the computer program product further comprising sets of instructions for: sending to the QoS-based application an indicator that indicates the requested QoS parameters are supported by the third base station.

9. An apparatus (150) configured for transmitting quality of service, QoS, parameters to base stations (110), the apparatus comprising:
means for receiving QoS parameters from a QoS-based application (505) running on the apparatus (150);
means for storing the QoS parameters, along with an associated identifier, to a data stack (515) of the apparatus (150);
means for transmitting the QoS parameters to a first base station; the apparatus being **characterized by** further comprising
means for transmitting the QoS parameters to a second base station by retrieving the QoS parameters from the data stack (515) based upon the associated identifier, wherein the retrieving of th eQoS parameters from the data stack permits subsequent re-negotiations at handoffs between QoS and non-QoS aware base stations without the QoS-based application having to re-send the QoS parameters.

10. The apparatus of claim 9 wherein the means for transmitting the QoS parameters to the second base station comprises a means for transmitting the QoS parameters to the second base station without re-receiving the QoS parameters from the QoS-based application.

11. The apparatus of claim 9 comprising further means for providing to the QoS-based application access to the Internet for the QoS-based application to provide an Internet-based service.

12. The apparatus of claim 9 further comprising: means for transmitting the QoS parameters to a third base station by retrieving the QoS parameters from the data stack, the third base station being a QoS aware base station; and means for sending to the QoS-based application an indicator that indicates the QoS parameters are supported by the third base station.

13. The apparatus of claim 10 wherein the means comprise: a quality of service, QoS, based application; a data stack; and a data stack controller configured for: receiving QoS parameters from the QoS-based application; storing the QoS parameters to the data stack; transmitting the QoS parameters to a first base station; and transmitting the QoS parameters to a second base station by retrieving the QoS parameters from the data stack; wherein the apparatus is configured as a mobile terminal.

14. The mobile terminal of claim 13 wherein the data stack controller is configured for transmitting the QoS parameters to the second base station without re-receiving the QoS parameters from the QoS-based application.

15. The mobile terminal of claim 13 wherein the second base station is a non-QoS aware base station, the data stack controller being further configured for: sending to the QoS-based application an indicator that indicates the QoS-based application will receive a "best effort" of resources of the second base station.

16. The mobile terminal of claim 15 wherein the data stack controller is further configured for: transmitting the QoS parameters to a third base station by retrieving the QoS parameters from the data stack, the third base station being a QoS aware base station; and sending to the QoS-based application an indicator that indicates the QoS parameters are supported by the third base station.

17. The mobile terminal of claim 13 wherein: the first and second base stations are connected with the Internet; through the first and second base stations, the QoS-based application is configured to access the Internet and provide an Internet-based service.

18. A method at a mobile terminal (150) for transmitting quality of service, QoS, parameters to base stations (110), the method comprising:
receiving (208) QoS parameters from a QoS-based application (505) running on the mobile terminal (150);
storing (210) the QoS parameters, along with an associated identifier, to a data stack (515) of the mobile terminal (150);
transmitting (212) the QoS parameters to a first base station; the method being **characterized by** further comprising the steps of
transmitting the QoS parameters to a second base station by retrieving the QoS parameters from the data stack (515) based upon the associated identifier, wherein the retrieving of the QoS parameters from the data stack permits subsequent re-negotiations at handoffs between QoS and non-QoS aware base stations without the QoS-based application having to re-send the QoS parameters.

19. The method of claim 18 wherein transmitting the QoS parameters to the second base station comprises transmitting the QoS parameters to the second base station without re-receiving the QoS parameters from the QoS-based application.

20. The method of claim 18 wherein the QoS-based application is configured to access the Internet and provide an Internet-based service.

21. The method of claim 18 further comprising: transmitting the QoS parameters to a third base station by retrieving the QoS parameters from the data stack, the third base station being a QoS aware base station; and sending to the QoS-based application an indicator that indicates the QoS parameters are supported by the third base station.

## Patentansprüche

1. Ein Computerprogramm-Produkt, welches einen maschinenlesbaren Datenträger aufweist, welches gespeicherte Befehle umfasst, welche beim Ausführen auf einem mobilen Gerät (150) das mobile Gerät veranlasst, QoS-Parameter (Quality of Service) an Basisstationen (110) zu übertragen, wobei das Computerprogramm-Produkt Sätzen von Befehlen umfasst zum:
Empfangen (208) von QoS-Parametern von einer QoS-basierten Anwendung (505), welche auf dem mobilen Gerät arbeitet (150);
Speichern (210) der QoS-Parameter zusammen mit einer assoziierten Kennung, auf einem Daten-Stack (515) des mobilen Geräts (150);
Übertragen (212) der QoS-Parameter an eine erste Basisstation; wobei das Computerprogramm-Produkt durch folgende Schritte gekennzeichnet ist
Übertragen der QoS-Parameter an eine zweite Basisstation durch Abrufen der QoS-Parameter vom Daten-Stack (515) basiert auf der assoziierten Kennung, wobei das Abrufen der QoS-Parameter vom Daten-Stack nachfolgende Wiederverhandlungen beim Handoff zwischen QoS und non-QoS fähigen Basisstationen ermöglicht, ohne dass die QoS-basierte Anwendung die QoS-Parameter neu übertragen muss.

2. Computerprogramm-Produkt nach Anspruch 1, wobei der Satz von Befehlen zum Übertragen der QoS-Parameter an die zweite Basisstation einen Satz von Befehlen umfasst, welcher zum Übertragen der QoS-Parameter an die zweite Basisstation, ohne die QoS-Parameter von der QoS-basierten Anwendung erneut zu empfangen, geeignet sind.

3. Computerprogramm-Produkt nach Anspruch 1, wobei die QoS-basierte Anwendung derart konfiguriert ist, um den Betrieb fortzuführen ohne jegliche Unterbrechung, die von der Übertragung der QoS-Parameter an die zweite Basisstation veranlasst würde.

4. Computerprogramm-Produkt gemäß Anspruch 1, wobei die QoS-Parameter eine vorgegebene Bandbreite umfassen, eine maximale Verzögerung, einen maximalen Jitter, oder eine beliebige Kombination davon.

5. Computerprogramm-Produkt nach Anspruch 1, wobei die QoS-basierte Anwendung für den Internet-Zugriff und zum Bereitstellen eines Internet-basierten Dienstes konfiguriert ist.

6. Computerprogramm-Produkt nach Anspruch 1 ferner aufweisend Befehlsätzen zum Übertragen der QoS-Parameter an eine dritte Basisstation durch Abrufen der QoS-Parameter vom Daten-Stack, wobei die dritte Basisstation eine QoS-fähigen Basisstation ist, und zum Senden eines Indikators an die QoS-basierte Anwendung, welcher anzeigt, dass die QoS-Parameter von der dritten Basisstation unterstützt werden.

7. Computerprogramm-Produkt nach Anspruch 6, wobei das Übertragen der QoS-Parameter an die dritte Basisstation von einem zweiten Handoff des aktiven Anrufs von der zweiten Basisstation an die dritte Basisstation verursacht wird.

8. Computerprogramm-Produkt nach Anspruch 7, wobei die zweite Basisstation eine QoS-fähige Basisstation ist, wobei das Computerprogramm-Produkt ferner Sätze von Befehlen umfasst, zum Senden an die QoS-basierte Anwendung eines Indikators, welcher anzeigt dass die angeforderten QoS-Parameter von einer dritten Basisstation unterstützt werden.

9. Eine Vorrichtung (150), die betriebsbereit ist, QoS-Parameter an Basisstationen (110) zu übertragen, wobei die Vorrichtung umfasst:
Mittel zum Empfangen (208) von QoS-Parametern von einer QoS-basierten Anwendung (505), welche auf dem mobilen Gerät arbeitet (150);
Mittel zum Speichern (210) der QoS-Parameter zusammen mit einer assoziierten Kennung, auf einem Daten-Stack (515) des mobilen Geräts (150);
Mittel zum Übertragen (212) der QoS-Parameter an eine erste Basisstation; wobei die Vorrichtung folgende kennzeichnende Mittel weiter umfasst
Mittel zum Übertragen der QoS-Parameter an eine zweite Basisstation durch Abrufen der QoS-Parameter vom Daten-Stack (515) basierend auf der assoziierten Kennung, wobei das Abrufen der QoS-Parameter vom Daten-Stack nachfolgende Wiederverhandlungen beim Handoff zwischen QoS und non-QoS fähigen Basisstationen ermöglicht, ohne dass die QoS-basierte Anwendung die QoS-Parameter neu übertragen muss.

10. Vorrichtung nach Anspruch 9, wobei das Mittel zum Übertragen der QoS-Parameter an die zweite Basisstation Mittel zum Übertragen der QoS-Parameter an die zweite Basisstation umfasst, ohne diese von der QoS-basierten Anwendung erneut zu empfangen.

11. Vorrichtung nach Anspruch 9 ferner aufweisend Mittel zum Bereitstellen vom Internet-Zugriff an die QoS-basierte Anwendung und zum Bereitstellen eines Internet-basierten Dienstes.

12. Vorrichtung nach Anspruch 9 ferner aufweisend Mittel zum Übertragen der QoS-Parameter an eine dritte Basisstation durch Abrufen der QoS-Parameter vom Daten-Stack, wobei die dritte Basisstation eine QoS-fähige Basisstation ist; und Mittel zum Senden eines Indikators an die QoS-basierte Anwendung, welcher anzeigt, dass die QoS-Parameter von der dritten Basisstation unterstützt werden.

13. Vorrichtung nach Anspruch 10, wobei die Mittel umfassen: eine Anwendung basierend auf Dienstqualität, QoS; einen Daten-Stack; und einen Daten-Stack-Kontroller der konfiguriert ist zum Empfangen von QoS-Parametern von der QoS-basierten Anwendung; Speichern der QoS-Parameter auf die Daten-Stack; Übertragen der QoS-Parameter an eine erste Basisstation; und Übertragen der QoS-Parameter an eine zweite Basistaiton durch Abrufen der QoS-Parameter von dem Daten-Stack; wobei die Vorrichtung als eine Mobilstation konfiguriert ist.

14. Die Mobilstation nach Anspruch 13, wobei der Daten-Stack-Kontroller konfiguriert ist zum Übertragen der QoS-Parameter an die zweite Basisstation ohne die QoS-Parameter von der QoS-basierten Anwendung erneut zu empfangen.

15. Die Mobilstation nach Anspruch 13, wobei die zweite Basisstation eine nicht-QoS fähige Basisstation ist, wobei der Daten-Stack-Kontroller ferner konfiguriert ist zum: Senden an die QoS-basierte Anwendung eines Indikators welcher anzeigt, dass die QoS-basierte Anwendung einen "best effort" von Ressourcen der zweiten Basisstation empfängt.

16. Die Mobilstation nach Anspruch 15, wobei der Daten-Stack-Kontroller ferner betriebsbereit ist zum Übertragen der QoS-Parameter an eine dritte Basisstation durch Abrufen der QoS-Parameter vom Daten-Stack, wobei die dritte Basisstation eine QoS-fähige Basisstation ist; und Senden an die QoS-basierte Anwendung eines Indikators welcher anzeigt, dass die QoS-Parameter von der dritten Basisstation unterstützt werden.

17. Die Mobilstation nach Anspruch 13 wobei die erste und zweite Basisstationen mit dem Internet verbunden sind; wobei die QoS-basierte Anwendung durch die erste und zweite Basisstationen konfiguriert ist, um auf das Internet zuzugreifen und einen Internet-basierten Dienst bereitzustellen.

18. Ein Verfahren für eine Mobilstation (150) zum Übertragen von Dienstqualität-Parametern, QoS, an Basisstationen (110), wobei das Verfahren aufweist:
Empfangen (208) von QoS-Parametern von einer QoS-basierten Anwendung (505) welche auf der Mobilstation (150) läuft;
Speichern (210) der QoS-Parameter, zusammen mit einer zugehörigen Kennung, auf einen Daten-Stack (515) der Mobilstation (150);
Übertragen (212) der QoS-Parameter an eine erste Basisstation; wobei das Verfahren durch folgende Schritte gekennzeichnet ist
Übertragen der QoS-Parameter an eine zweite Basisstation durch Abrufen der QoS-Parameter vom Daten-Stack (515) basierend auf der zugehörigen Kennung, wobei das Abrufen der QoS-Parameter vom Daten-Stack anschließende erneute Verhandlungen beim Handoff zwischen QoS und nicht-QoS basierte Basisstationen ermöglicht, ohne dass die QoS-basierte Anwendung die QoS-Parameter erneut senden muss.

19. Verfahren nach Anspruch 18 wobei das Übertragen der QoS-Parameter an die zweite Basisstation das Übertragen der QoS-Parameter an die zweite Basisstation umfasst, ohne das erneute Empfangen der QoS-Parameter von der QoS-basierten Anwendung.

20. Verfahren nach Anspruch 18, wobei die QoS-basierte Anwendung konfiguriert ist um auf das Internet zuzugreifen und zum Bereitstellen eines Internet-basierten Dienstes.

21. Verfahren nach Anspruch 18 ferner aufweisend: Übertragen der QoS-Parameter an eine dritte Basisstation durch Abrufen der QoS-Parameter vom Daten-Stack, wobei die dritte Basisstation eine QoS-basierte Basisstation ist; und Senden an die QoS-basierte Anwendung eines Indikators welcher anzeigt, dass die QoS-Parameter von der dritten Basisstation unterstützt werden.

## Revendications

1. Un programme-produit informatique comprenant un support lisible par calculateur sur lequel sont stockées des instructions qui, lorsqu'elles sont exécutées sur un terminal mobile (150), font en sorte que le terminal mobile émette des paramètres de qualité de service, QoS, vers des stations de base (110), le programme-produit informatique comprenant des jeux d'instructions pour :
recevoir (208) des paramètres QoS depuis une application basée sur QoS (505) opérant sur le terminal mobile (150) ;
mémoriser (210) les paramètres QoS, ainsi qu'un identifiant associé, dans une pile de données (515) du terminal mobile (150) ;
émettre (212) les paramètres QoS vers une première station de base ;
le programme-produit informatique étant **caractérisé en ce qu'**il comprend en outre les étapes consistant à :
émettre les paramètres QoS vers une seconde station de base par récupération des paramètres QoS dans la pile de données (515) sur la base de l'identifiant associé, la récupération des paramètres QoS dans la pile de données permettant des renégociations ultérieures aux transferts entre des stations de base avisées du QoS et non avisées du QoS sans que l'application basée sur QoS n'ait à envoyer à nouveau les paramètres QoS.

2. Le programme-produit informatique de la revendication 1, dans lequel le jeu d'instructions pour émettre les paramètres QoS vers le seconde station de base comprend un jeu d'instructions pour émettre les paramètres QoS vers la seconde station de base sans recevoir à nouveau les paramètres QoS depuis l'application basée sur QoS.

3. Le programme-produit informatique de la revendication 1, dans lequel l'application basée sur QoS est configurée pour continuer à fonctionner sans aucune interruption provoquée par l'émission des paramètres QoS vers la seconde station de base.

4. Le programme-produit informatique de la revendication 1, dans lequel les paramètres QoS comprennent une quantité spécifiée de bande passante, une quantité maximale de retard, une quantité maximale de gigue ou toute combinaison des précédents.

5. Le programme-produit informatique de la revendication 1, dans lequel l'application basée sur QoS est configurée pour accéder à Internet et fournir un service basé sur Internet.

6. Le programme-produit informatique de la revendication 1, comprenant en outre des jeux d'instructions pour : émettre les paramètres QoS vers une troisième station de base par récupération des paramètres QoS dans la pile de données, la troisième station de base étant une station de base avisée du QoS ; et envoyer vers l'application basée sur QoS un indicateur qui indique que les paramètres QoS sont supportés par la troisième station de base.

7. Le programme-produit informatique de la revendication 6, dans lequel : l'émission des paramètres QoS vers la troisième station de base est produite par un second transfert de l'appel actif depuis la seconde station de base vers la troisième station de base.

8. Le programme-produit informatique de la revendication 7, dans lequel la seconde station de base est une station de base avisée du QoS, le programme-produit informatique comprenant en outre des jeux d'instructions pour : envoyer vers l'application basée sur QoS un indicateur qui indique que les paramètres QoS requis sont supportés par la troisième station de base.

9. Un dispositif (150) configuré pour émettre des paramètres de qualité de service, QoS, vers des stations de base (110), le dispositif comprenant :
des moyens pour recevoir des paramètres QoS depuis une application basée sur QoS (505) tournant sur le dispositif (150) ;
des moyens pour mémoriser les paramètres QoS, ainsi qu'un identifiant associé, dans une pile de données (515) du dispositif (150) ;
des moyens pour émettre les paramètres QoS vers une première station de base ;
le dispositif étant **caractérisé en ce qu'**il comprend en outre :
des moyens pour émettre les paramètres QoS vers une seconde station de base par récupération des paramètres QoS dans la pile de données (515) sur la base de l'identifiant associé, la récupération des paramètres QoS dans la pile de données permettant des renégociations ultérieures aux transferts entre des stations de base avisées du QoS et non avisées du QoS sans que l'application basée sur QoS n'ait à envoyer à nouveau les paramètres QoS.

10. Le dispositif de la revendication 9, dans lequel les moyens pour émettre les paramètres QoS vers la seconde station de base comprennent des moyens pour émettre les paramètres QoS vers la seconde station de base sans recevoir à nouveau les paramètres QoS depuis l'application basée sur QoS.

11. Le dispositif de la revendication 9, comprenant en outre des moyens pour permettre à l'application basée sur QoS d'accéder à Internet pour que l'application basée sur QoS fournisse un service basé sur Internet.

12. Le dispositif de la revendication 9, comprenant en outre :
des moyens pour émettre les paramètres QoS vers une troisième station de base par récupération des paramètres QoS dans la pile de données, la troisième station de base étant une station de base avisée du QoS ; et des moyens pour envoyer vers l'application basée sur QoS un indicateur qui indique que les paramètres QoS sont supportés par la troisième station de base.

13. Le dispositif de la revendication 10, dans lequel les moyens comprennent :
une application à base de qualité de service, QoS ; une pile de données ; et un contrôleur de pile de données configuré pour : recevoir des paramètres QoS depuis l'application basée sur QoS ; mémoriser les paramètres QoS dans la pile de données ; émettre les paramètres QoS vers une première station de base ; et émettre les paramètres QoS vers une seconde station de base en récupérant les paramètres QoS dans la pile de données ;
le dispositif étant configuré en tant que terminal mobile.

14. Le terminal mobile de la revendication 13, dans lequel le contrôleur de pile de données est configuré pour émettre les paramètres QoS vers la seconde station de base sans recevoir à nouveau les paramètres QoS depuis l'application basée sur QoS.

15. Le terminal mobile de la revendication 13, dans lequel la seconde station de base est une station de base qui n'est pas avisée du QoS, le contrôleur de pile de données étant en outre configuré pour : envoyer vers l'application basée sur QoS un indicateur qui indique que l'application basée sur QoS recevra un "meilleur effort" des ressources de la seconde station de base.

16. Le terminal mobile de la revendication 15, dans lequel le contrôleur de pile de données est en outre configuré pour : émettre les paramètres QoS vers une troisième station de base par récupération des paramètres QoS dans la pile de données, la troisième station de base étant une station de base avisée du QoS ; et envoyer à l'application basée sur QoS un indicateur qui indique que les paramètres QoS sont supportés par la troisième station de base.

17. Le terminal mobile de la revendication 13, dans lequel : les première et seconde stations de base sont reliées à Internet ; par l'intermédiaire de la première et de la seconde station de base, l'application basée sur QoS est configurée pour accéder à Internet et fournir un service basé sur Internet.

18. Un procédé pour émettre, par un terminal mobile (150), des paramètres de qualité de service, QoS, vers des stations de base (110), le procédé comprenant les étapes consistant à :
recevoir (208) des paramètres QoS depuis une application basée sur QoS (505) tournant sur le terminal mobile (150) ;
mémoriser (210) les paramètres QoS, ainsi qu'un identifiant associé, dans une pile de données (515) du terminal mobile (150) ;
émettre (212) les paramètres QoS vers une première station de base ;
le procédé étant **caractérisé en ce qu'**il comprend en outre les étapes consistant à :
émettre les paramètres QoS vers une seconde station de base par récupération des paramètres QoS dans la pile de données (515) sur la base de l'identifiant associé, la récupération des paramètres QoS dans la pile de données permettant des renégociations ultérieures aux transferts entre des stations de base avisées du QoS et non avisées du QoS sans que l'application basée sur QoS n'ait à envoyer à nouveau les paramètres QoS.

19. Le procédé de la revendication 18, dans lequel l'émission des paramètres QoS vers le seconde station de base comprend l'émission des paramètres QoS vers la seconde station de base sans recevoir à nouveau les paramètres QoS depuis l'application basée sur QoS.

20. Le procédé de la revendication 18, dans lequel l'application basée sur QoS est configurée pour accéder à Internet et fournir un service basé sur Internet.

21. Le procédé de la revendication 18, comprenant en outre : l'émission des paramètres QoS vers une troisième station de base par récupération des paramètres QoS dans la pile de données, la troisième station de base étant une station de base avisée du QoS ; et l'envoi vers l'application basée sur QoS d'un indicateur qui indique que les paramètres QoS sont supportés par la troisième station de base.
